# EUROPÄISCHE PATENTSCHRIFT

(11) **EP 0 857 882 B1**
(45) Veröffentlichungstag und Bekanntmachung des Hinweises auf die Patenterteilung: **30.07.2003**
(21) Anmeldenummer: 98101178.6
(22) Anmeldetag: 23.01.1998
(51) Int. Cl.: F16C 29/12

(54) **Läuferbaugruppe für eine Linearführungseinrichtung**
Sliding unit for a linear bearing device
Ensemble de chariot pour un dispositif de palier linéaire

(30) Priorität: 07.02.1997 DE 19704711
(43) Veröffentlichungstag der Anmeldung: 12.08.1998
(73) Patentinhaber: Deutsche Star GmbH, 97424 Schweinfurt (DE)
(72) Erfinder: Faulhaber, Thomas, 97493 Bergrheinfeld (DE)
(74) Vertreter: Herzog, Markus, Dipl.-Phys. Dr.

(56) Entgegenhaltungen:
- DE-A- 3 638 968
- DE-U- 9 013 522
- GB-A- 261 531

## Beschreibung

Die vorliegende Erfindung betrifft eine Läuferbaugruppe für ein Linearführungseinrichtung gemäß dem Oberbegriff des Anspruchs 1.

Eine derartige Läuferbaugruppe ist aus der DE 36 38 968 A1 bekannt. Die DE 36 38 968 A1 zeigt in der Fig. 4 eine Läuferbaugruppe, die einen Grundkörper und eine mittels eines Stützbolzens am Grundkörper gehaltene Führungselementeneinheit umfasst. Der Stützbolzen durchsetzt eine Bohrung im Grundkörper, welche einen größeren Durchmesser als der Stützbolzen aufweist, und ist in eine Gewindebohrung in der Führungselementeneinheit eingeschraubt. Grundkörper und Führungselementeneinheit liegen an einer zur Führungsachse der Läuferbaugruppe parallelen ebenen Fläche aneinander an. Diese Fläche bildet eine Zustellebene, innerhalb der die Führungselementeneinheit bezüglich des Grundkörpers auf Grund des größeren Durchmessers der durchsetzten Grundkörper-Bohrung verschieblich ist. Der Stützbolzen verläuft im Wesentlichen orthogonal zu dieser Zustellebene. In dem Grundkörper ist parallel zur Zustellebene und zur Führungsachse hinweisend eine Durchgangsöffnung derart vorgesehen, dass sich die Achse der Durchgangsöffnung mit der Achse der Durchgangsbohrung für den Stützbolzen unter einem rechten Winkel schneidet. Ein Stützbolzen-fernerer Abschnitt der Durchgangsöffnung ist mit einem Innengewinde versehen, in das eine Madenschraube eingedreht ist. Zwischen Madenschraube und Stützbolzen befindet sich ein Druckkörper, dessen eines Ende an dem Stützbolzen umschlingungsfrei angreift und dessen anderes Ende an der Madenschraube anliegt. Durch Eindrehen der Madenschraube in den Gewindeabschnitt der Durchgangsöffnung kann der Stützbolzen mit der Führungselementeneinheit, in die er eingeschraubt ist, zur Führungsachse hin zugestellt werden.

Nachteilig an dieser Konstruktion ist dabei, dass die von der Madenschraube ausgeübte Zustellkraft in axialer Richtung des Stützbolzens einen relativ großen Versatz von der Längsführungsachse aufweist, zu der die Zustellung hin erfolgen soll. Damit kann die ausgeübte Zustellkraft nur unter verhältnismäßig großen Verlusten ausgenutzt werden. Darüber hinaus droht bei dieser Anordnung eine Biegung des Stützbolzens mit einer damit verbundenen Fehlorientierung der Führungselementeneinheit. Weiterhin ist es mit der gegebenen Konstruktion lediglich möglich, eine Zustellkraft in Richtung der Führungsachse, jedoch nicht von dieser weg auf die Führungselementeneinheit auszuüben. Dies kann die Einstellung eines gewünschten Lagerspiels erschweren.

Aus der DE-G-94 07 424 ist eine Linearführungseinheit bekannt, welche an einem Grundkörper zwei Führungselementeneinheiten umfaßt, die jeweils mit Laufrollen als Führungselemente in Anlage an einer Führungsbahn sind. Jede der Führungselementeneinheiten ist durch eine Mehrzahl von Bolzen am Grundkörper festgelegt. Um eine Anstellkraft der Führungselementeneinheiten gegen die Führungsbahn zu erhalten, sind die Bolzen, durch welche die Führungselementeneinheiten am Grundkörper festgelegt sind, in jeweiligen Kanälen in den Führungselementeneinheiten in einer Zustellrichtung, d. h. einer Richtung im wesentlichen orthogonal zur Führungsachse, mit Bewegungsspiel aufgenommen. Die Bolzen sind in ihren die Führungselementeneinheiten durchsetzenden Abschnitten durch elastische Ringe umgeben, die jeweils an Innenumfangsflächen der Kanäle anliegen und somit durch ihre elastische Verformung eine Vorspannung der jeweiligen Laufrollen gegen die Führungsbahnen erzeugen. Bei schweren Führungswagen besteht jedoch das Problem, daß aufgrund des Eigengewichts der Führungswagen die elastischen Ringelemente keine ausreichende Kraftwirkung vorsehen können, um die Führungselementeneinheiten in geeignetem Ausmaß gegen die Führungsbahnen vorzuspannen. Aus der EP 0 517 951 B1 sowie aus der DE 90 13 522 U1, deren Priorität die EP 0 517 951 B1 beansprucht, ist ein Mechanismus zur Befestigung einer Führungselementeneinheit an einem Grundkörper bekannt. Dieser Befestigungsmechanismus umfaßt eine Stellvorrichtung, die aus einer Stellschraube und einer Stellhülse besteht. Die Stellhülse ist in einem Abschnitt mit erweitertem Durchmesser eines Kanals aufgenommen, welcher von einem Bolzen zum Festlegen der Führungselementeneinheit an dem Grundkörper durchsetzt wird. Der Bolzen ist in dem Kanal wiederum mit Bewegungsspiel in der Zustellrichtung aufgenom-men. Die Stellhülse weist orthognal zum Kanal eine Gewinde-öffnung auf, in die ein Gewindeabschnitt der Stellschraube eingreift. Die Stellschraube durchsetzt eine Schraubendurch-gangsöffnung inder Führungselementeneinheit. An einer von der Führungsbahn abgewandten Rückseite der Führungselementeneinheit stützt sich die Stellschraube mit ihrem Kopf an der Führungselementeneinheit ab. Durch Verdrehen der Stellschraube wird diese, je nach Drehrichtung, weiter in die Gewindeöffnung in der Stellhülse eingeschraubt bzw. aus dieser öffnung herausgeschraubt. Dies führt aufgrund der Abstützung der Stellschraube mit ihrem Kopf an der Führungselementeneinheit zu einer Verschiebung der Stellhülse orthogonal zum Kanal. Bei Einschrauben der Stellschraube in die Stellhülse wird die Stellhülse bezüglich der Führungselementeneinheit von der Führungsbahn weg verlagert. Da der Bolzen die Stellhülse nahezu spielfrei durchsetzt, führt die Verschiebung der Stellhülse von der Führungsbahn weg zu einer entsprechenden Verschiebung der Führungselementeneinheit auf die Führungsbahn zu, d. h. durch Verdrehen der Stellschraube kann eine Zustellkraft erzeugt werden. Da dieser bekannte Verstellmechanismus durch zwei separate Elemente gebildet ist, nämlich die Stellschraube und die Stellhülse, welche den jeweiligen Bolzen vollstängig umgibt, ist der Montagevorgang einer derartigen Fürungselementeneinheit relativ kompliziert. Dazu muß zunächst die Stellhülse in einer für diese vorgesehenen Öffnung in der Führungselementeneinheit präzise derart positioniert werden, daß ihre Gewindeöffnung mit einer Schraubendurchgangsöffnung in der Führungselementeneinheit ausgerichtet ist. Erst nach einem derartigen Ausrichten und dem Einschrauben der Stellschraube in die Stellhülse kann die Führungselementeneinheit an dem Grundkörper angebracht werden.

Der Volständigkeit halber sei auf die GB 261531 A hingewiesen, in der eine durch Stellschrauben verstellbare Führungsschieneneinheit offenbart ist. Aus dieser Schrift ist jedoch weder eine vom Grunkörper gesonderte Führungselementeneinheit noch eine bezüglich des Grunkörpers verschiebliche Führungselementeneinheit bekannt. Darüber hinaus ist die dort gezeigte Lösung nur für Führungsschienen anwendbar, die einander gegenüberliegen und sich unter einem Winkel schneidende Führungsbenen aufweisen, auf denen Führungsrollen als Führungselemente abrollen.

Es ist die Aufgabe der vorliegenden Erfindung, eine Läuferbaugruppe für eine Linearführungseinrichtung vorzusehen, welche einfach zusammenzusetzen ist, welche eine leichte Anbringung einer Führungselementeneinheit an einem Grundkörper ermöglicht und welche die Möglichkeit einer einfachen Einstellung eines gewünschten Lagerspiels bietet.

Erfindungsgemäß wird diese Aufgabe durch eine Läuferbaugruppe mit den Merkmalen des Anspruchs 1 gelöst.

Dabei ist erfindungsgemäß eine derartige Ausgestaltung vorgesehen, daß das Stützteil durch das Stellgetriebe längs einer Stellkrafteinwirkungsachse beaufschlagt ist, die in der Zustellebene in einer zur Zustellrichtung orthogonalen Versatzrichtung gegenüber der Achse des Stützbolzens versetzt ist und mit mindestens einem Querausladebereich an dem Stützbolzen anliegt. Außerdem ist das Stützteil an der Führungselementeneinheit vorgesehen.

Beispielsweise kann das Stützteil so ausgebildet sein, daß es mit zwei in Zustellrichtung beabstandeten Querausladebereichen einen Teil des Stützbolzens eingabelt.

Das Stützteil ist besonders einfach herzustellen, wenn es als ein Rotationskörper mit einer Rotationskörperachse ausgebildet ist, welche im wesentlichen parallel zur Zustellrichtung liegt. Dabei kann das Stützteil beispielsweise als ein spulenförmiges Stützteil mit zwei Flanschen ausgebildet sein, welche einen Teil des Stützbolzens eingabeln. Insbesondere dann, wenn ein Teil des Stützbolzens durch das Stützteil eingegabelt ist, ist es möglich, sowohl eine Kraft in Zustellrichtung auf die Führungsbahn zu, als auch von der Führungsbahn weg zu erzeugen, d. h., es ist beispielsweise möglich, ein bestimmtes beabsichtigtes Spiel zwischen der Führungselementeneinheit und der Laufbahn vorzusehen.

In einer vorteilhaften Ausgestaltung ist das Stellgetriebe ein Verschraubungsgetriebe, welches eine Eingangswelle mit einer Drehwerkzeug-Eingriffsformation aufweist. Dabei kann das Verschraubungsgetriebe Verschraubungsmittel umfassen, deren Verschraubungsachse parallel zur Zustellrichtung verläuft.

Gemäß einer besonders vorteilhaften Ausgestaltung kann vorgesehen sein, daß das Verschraubungsgetriebe einen zur gemeinsamen Drehbewegung und zur gemeinsamen Bewegung in Zustellrichtung mit dem Stützteil verbundenen Schraubbolzen umfaßt, welcher in eine Gewindebohrung der Führungselementeneinheit eingreift. Durch Verstellen des mit dem Stützteil verbundenen Schraubbolzens kann also das Stützteil in der Führungselementeneinheit verschoben werden, was zu einer dementsprechenden Verlagerung der Führungselementeneinheit bezüglich des Bolzens und somit des Grundkörpers führt.

Alternativ ist es möglich, daß das Verschraubungsgetriebe einen Schraubbolzen umfaßt, welcher in der Führungselementeneinheit drehbar und axial unverschiebbar gelagert ist und daß dieser Schraubbolzen mit dem Stützteil verschraubt ist, wobei das Stützteil selbst gegen Mitdrehen mit dem Schraubbolzen gesichert ist.

Um eine möglichst einfache Einstellung der Zustellkraft zu ermöglichen, wird vorgeschlagen, daß die Drehwerkzeug-Eingriffsformation von einer Außenfläche der Führungselementeneinheit her zugänglich ist, welche der Laufbahn abgelegen ist.

Zur Erzeugung einer größtmöglichen Zustellwirkung bei Verlagerung des Stützteils in der Führungselementeneinheit wird vorgeschlagen, daß das Stützteil in einem Durchgang der Führungselementeneinheit aufgenommen ist, welcher sich parallel zur Zustellrichtung erstreckt.

Wenn das Stützteil in dem Durchgang quer zur Zustellrichtung an der Führungselementeneinheit abgestützt ist, dann kann eine ungewollte Verlagerung oder Kraftbeaufschlagung des Stützteils in der Führungselementeneinheit vermieden werden.

Bei einer besonders einfach herzustellenden Ausgestaltung kann dann vorgesehen sein, daß das Stützteil mit einem kreisförmigen Umriß in mindestens einem Abschnitt kreisförmigen Querschnitts des Durchgangs abgestützt ist.

Um in einfacher Weise eine Zusammenwirkung des Stützteils mit dem Bolzen zu ermöglichen, wird vorgeschlagen, daß der Durchgang sich innerhalb der Führungselementeneinheit mit einem Kanal verschneidet, welcher den Stützbolzen aufnimmt.

Um die Verstellbarkeit der Führungselementeneinheit in der Zustellrichtung zu ermöglichen, wird vorgeschlagen, daß der den Stützbolzen aufnehmende Kanal zumindest in Zustellrichtung ein Übermaß gegenüber dem Querschnitt des Stützbolzens besitzt.

Zur Erlangung einer geeigneten Orientierung der Führungselementeneinheit bezüglich der Führungsbahn wird vorgeschlagen, daß die Führungselementeneinheit an mindestens zwei in Richtung der Führungsachse beabstandeten Stützbolzen durch je ein Stützteil abgestützt ist. Hierzu kann beispielsweise vorgesehen sein, daß die beiden Stützteile in Richtung der Führungsachse beidseits eines Führungselements angeordnet sind.

Das mindestens eine Führungselement kann beispielsweise von einem Gleitschuh, einem Wälzkörperumlauf oder - vorzugsweise - einer Führungsrolle mit zur Zustellebene im wesentlichen orthogonaler Drehachse gebildet sein.

Um einen kompakten Aufbau vorzusehen, in welchem alle Komponenten einer jeweiligen Führungselementeneinheit gegen äußere Beeinträchtigung geschützt sind, wird vorgeschlagen, daß die Führungselementeneinheit gehäuseartig ausgebildet ist.

Bei derartiger Ausgestaltung kann zum Vorsehen eines geeigneten Verschiebevorgangs der Führungselementeneinheit an der Führungsbahn in der gehäuseartig ausgebildeten Führungselementeneinheit eine Schmiermittelversorgung für das mindestens eine Führungselement untergebracht sein.

Wenn die Führungselementeneinheit in Richtung der Führungsachse durch mindestens zwei Stützteile an jeweils zugehörigen Stützbolzen im wesentlichen unbeweglich abgestützt ist, dann ist gewährleistet, daß vor dem endgültigen Festlegen der Führungselementeneinheit an dem Grundkörper eine unbeabsichtigte Verschiebung der Führungselementeneinheit in Richtung der Führungsachse verhindert wird.

Vorteilhafterweise ist der mindestens eine Stützbolzen als Schraubbolzen ausgebildet, der dem Festspannen der Führungselementeneinheit an dem Grundkörper der Läuferbaugruppe dient. Um einen stabilen und sicheren Verschiebebetrieb der Läuferbaugruppe an der Führungsschienenbaugruppe zu ermöglichen, wird vorgeschlagen, daß sie mindestens zwei Führungselementeneinheiten mit je mindestens einem Führungselement zur Anlage an voneinander abgelegenen oder zueinander weisenden Laufbahnen der Führungsschienenbaugruppe umfaßt.

Die vorliegende Erfindung wird nachfolgend mit Bezug auf die beiliegenden Zeichnungen detailliert beschrieben. Es zeigt:
- Fig. 1: eine schematische Endansicht einer an einer Führungsschienenbaugruppe geführten Läuferbaugruppe;
- Fig. 2: eine Seitenansicht einer Läuferbaugruppe in Blickrichtung II in Fig. 3;
- Fig. 3: eine Schnittansicht der Läuferbaugruppe der Fig. 2 in einer Ebene III-III in Fig. 2;
- Fig. 4: eine Rückansicht der Läuferbaugruppe der Fig. 2 und 3 in Blickrichtung IV in Fig. 3;
- Fig. 5: eine Teilschnittansicht längs einer Linie V-V in Fig. 3;
- Fig. 6: eine Schnittansicht eines Bolzens mit einer zugeordneten Verstellschraube längs einer Linie VI-VI in Fig. 5;
- Fig. 7: eine der Fig. 2 entsprechende Ansicht einer alternativen Ausgestaltungsform einer Führungselementeneinheit;

- Fig. 8: eine der Fig. 3 entsprechende Ansicht der Führungselementeneinheit gemäß Fig. 7;
- Fig. 9: eine der Fig. 4 entsprechende Ansicht der Führungs- elementeneinheit gemäß Fig. 7 und
- Fig. 10: eine Teilschnittansicht einer alternativen Ausgestaltungsform des erfindungsgemäßen Verstellmechanismus.

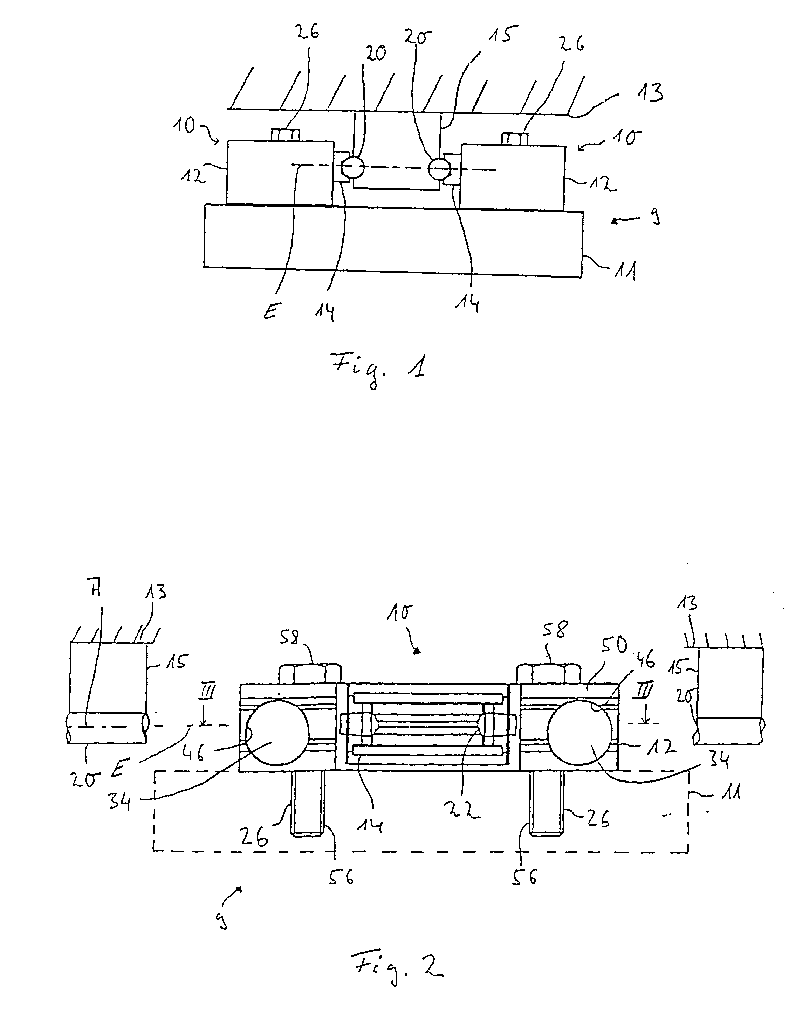

In Fig. 1 ist schematisch eine Endansicht einer Linearführungseinrichtung dargestellt. An einem beispielsweise stationären Basisteil 13 ist ein Laufbahnträger 15 festgelegt, an dem zwei voneinander abgewandte Laufbahnen 20 längs einer Führungsachse A (siehe Fig. 2) verlaufen. Durch die beiden Laufbahnen 20 ist eine nachfolgend detaillierter beschriebene Zustellebene E aufgespannt.

An einem Grundkörper 11 sind in seitlichem Abstand zueinander zwei Führungselementeneinheiten 10 jeweils durch Bolzen 26, insbesondere Schraubbolzen 26, derart festgelegt, daß sie mit ihren Führungselementen, d. h. Laufrollen 14, an den Führungsbahnen 20 geführt sind. Die somit gebildete Läuferbaugruppe 9 ist damit entlang der Führungsachse A verschiebbar.

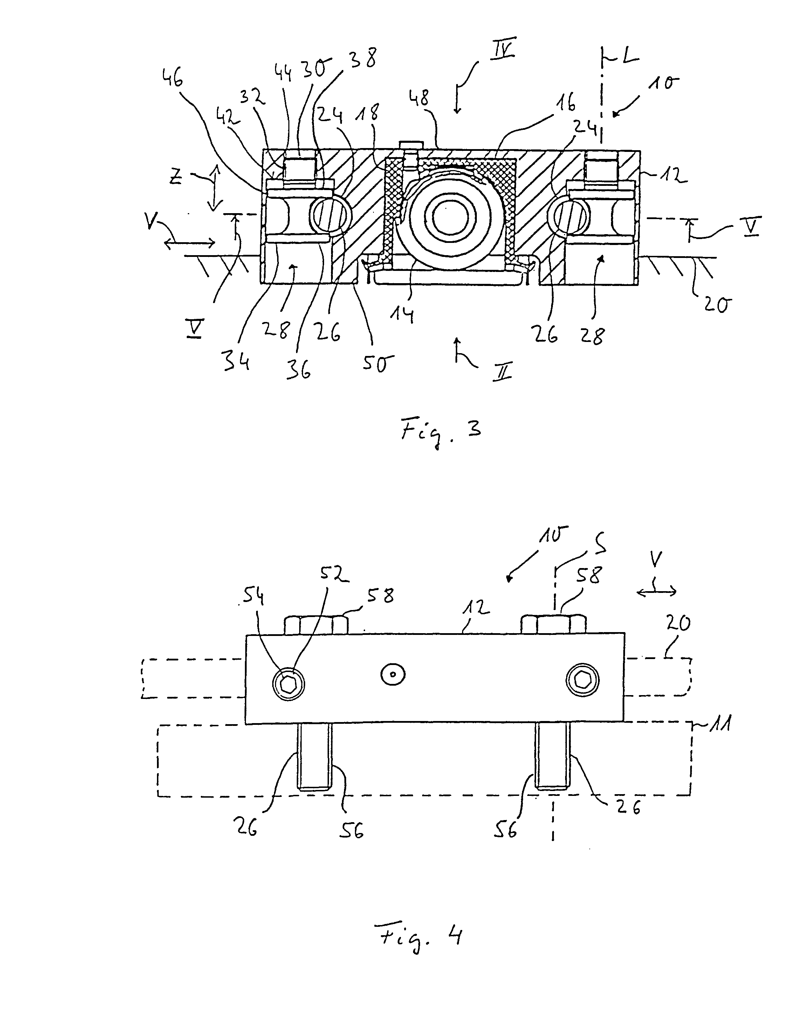

Der Aufbau einer der Führungselementeneinheiten 10 wird nachfolgend mit Bezug auf die Fig. 2 - 6 detailliert beschrieben.

Jede Führungselementeneinheit 10 umfaßt ein Gehäuse 12, in welchem eine Laufrolle 14 drehbar gelagert ist. Die Laufrolle 14 ist in einer Ausnehmung 16 (siehe Fig. 3) aufgenommen, in welcher ferner eine die Laufrolle 14 umgebende Auskleidung 18 angeordnet ist. Die Auskleidung 18 bildet einen im wesentlichen schmiermitteldichten Aufnahmeraum für die Laufrolle 14. An einem zur Führungsbahn 20 offenen Ende der Auskleidung 18 steht die Laufrolle 14 über die Ausnehmung 16 derart hervor, daß sie mit einer Führungsoberfläche derselben zur Anlage an der Führungsbahn 20 kommen kann, um somit die Führungselementeneinheit 10 entlang der Führungsbahn 20 verschieben zu können.

Eine detaillierte Beschreibung der Anordnung der Laufrolle 14 in der Auskleidung 18 und der Art der Abdichtung des in der Auskleidung 18 gebildeten Schmiermittelraumes bezüglich der Führungsbahn 20 ist in dem eingangs beschriebenen deutschen Gebrauchsmuster DE-G- 94 07 424 gegeben. Es wird hinsichtlich diesbezüglicher weiterer Details auf dieses deutsche Gebrauchsmuster verwiesen, dessen Inhalt hiermit durch Bezugnahme zum Offenbarungsgehalt der vorliegenden Anmeldung aufgenommen wird.

An beiden Seiten der Laufrolle 14 sind im Trägergehäuse 12 jeweils Kanäle 24 ausgebildet, durch welche hindurch die Bolzen 26 geführt werden können, um die Führungselementeneinheit 10, d. h. das Gehäuse 12, an dem Grundkörper 11 festzulegen. Der Innendurchmesser der Kanäle 24 ist dabei größer gewählt als der Außendurchmesser d der Bolzen 26, so daß die Bolzen 26 zumindest in einer Zustellrichtung Z mit Bewegungsspiel in den zugeordneten Kanälen 24 aufgenommen sind. Jedem der Bolzen 26 ist eine Verstellvorrichtung 28 zugeordnet, durch welche in nachfolgend detaillierter beschriebener Art und Weise eine Zustellbewegung des Gehäuses 12 bezüglich des Grundkörpers 11 auf die Führungsbahn 20 zu bewirkt werden kann.

Die den beiden Bolzen 26 zugeordneten Verstellvorrichtungen 28 sind in ihrem Aufbau und der Art der Zusammenwirkung mit dem jeweiligen Bolzen zueinander identisch. Es wird daher nachfolgend die Funktionsweise der Verstellvorrichtung 28 mit Bezug auf die in der Darstellung der Fig. 3 linke Verstellvorrichtung 28 detaillierter beschrieben. Entsprechendes gilt dann für die in der Darstellung der Fig. 3 rechte Verstellvorrichtung 28.

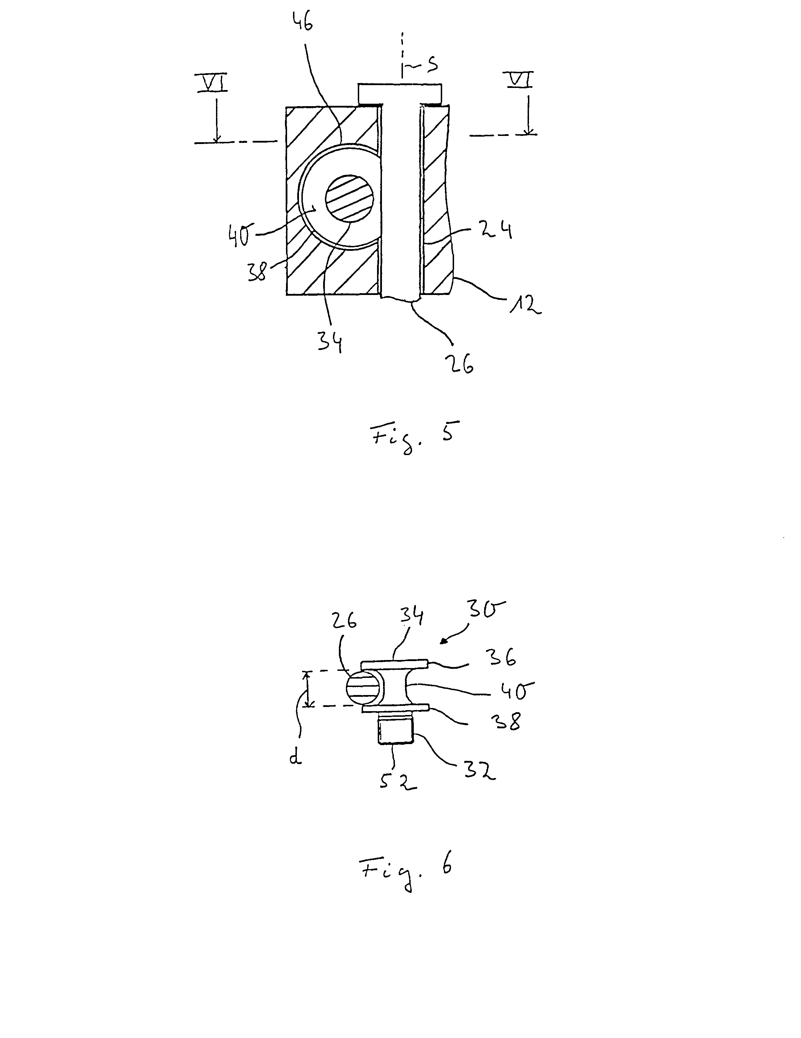

Die Verstellvorrichtung 28 umfaßt eine Verstellschraube 30, die einen ersten Abschnitt, nämlich einen Gewindeabschnitt 32 umfaßt, sowie einen zweiten mit dem Gewindeabschnitt 32 integral ausgebildeten Stützabschnitt 34 umfaßt. Wie auch in den Fig. 5 und 6 erkennbar, ist der Stützabschnitt 34 als ein spulenförmiger Rotationskörper ausgebildet, der zwischen zwei Flanschen 36, 38 eine Umfangsvertiefung 40 aufweist. Bei der Verstellschraube 30 bildet also der Stützabschnitt 34 das Stützteil, wogegen der Gewindeabschnitt 32 das Stellgetriebe für die Verstellvorrichtung bildet.

Im Gehäuse 12 ist im wesentlichen parallel zur Zustellrichtung Z und im wesentlichen orthogonal zur Führungsachse A ein Durchgang 42 ausgebildet, welcher einen ersten mit Innengewinde versehenen Abschnitt 44 aufweist und einen zweiten Abschnitt 46 aufweist, der zum ersten Abschnitt 44 koaxial angeordnet ist und einen größeren Durchmesser aufweist. In den ersten Abschnitt 44 mit Innengewinde ist der Gewindeabschnitt 32 der Verstellschraube 30 eingeschraubt, so daß der spulenförmige zweite Abschnitt 34 der Verstellschraube 30 in dem zweiten Abschnitt 46 des Durchgangs 42 liegt. Der Innendurchmesser des zweiten Abschnitts 46 des Durchgangs ist nur geringfügig größer als der Außenumfang der Flansche 36,38, so daß diese sich in seitlicher Richtung an der Innenumfangsfläche des Durchgangs 42 abstützen können.

Wie in Fig. 3 zu erkennen ist, sind der Durchgang 42 und der Kanal 24 relativ zueinander derart positioniert, daß bei Betrachtung in der Zustellebene E der zweite Abschnitt 46 des Durchgangs 42 und der Kanal 24 sich bereichsweise überlappen, d. h. wie auch in Fig. 5 zu erkennen, daß der Bolzen 26 bereichsweise im Durchgang 42, d. h. dem zweiten Abschnitt 46 desselben, liegt.

Die beiden Flansche 36, 38 greifen an in der Zustellrichtung Z gegenüberliegenden Oberflächenbereichen des Bolzens 26 an, so daß der Bolzen 26 zwischen diesen Flanschen 36, 38 gabelartig aufgenommen ist. Dabei ist der axiale Abstand der Flansche 36, 38 in der Schraubenlängsrichtung L (Fig. 3) derart bemessen, daß er im wesentlichen dem Außendurchmesser d des Bolzens 26 entspricht. Dies hat zur Folge, daß der Bolzen 26 in der Zustellrichtung nahezu spielfrei zwischen den Flanschen 36, 38 gehalten ist.

Der erste Abschnitt 44 des Durchgangs 42 ist zu einer von der Führungsbahn 20 abgewandten Rückseite 48 des Gehäuses 12 offen, wogegen der zweite Abschnitt 46 des Durchgangs 42 zu einer der Führungsbahn 20 zugewandten Vorderseite 50 des Gehäuses 12 offen ist. Der Gewindeabschnitt 32 der Verstellschraube 30 weist an seiner von der Rückseite 48 des Gehäuses 12 her zugänglichen Stirnseite 52 eine Inbusöffnung 54 auf, in welche ein Inbusschlüssel eingeführt werden kann. Um die Verstellschraube 30 am Gehäuse 12 anzubringen, kann beispielsweise von der Rückseite 48 her ein Inbusschlüssel in den Durchgang 42 eingeführt werden, so daß er zumindest bis in den zweiten Abschnitt 46 des Durchgangs 42 ragt. Nachfolgend wird die Verstellschraube 30 von der Vorderseite 50 des Gehäuses 12 mit dem Gewindeabschnitt 32 voran in die Verstellschraubenöffnung 42 eingeführt, bis der Inbusschlüssel in der Inbusöffnung 54 zu sitzen kommt. Durch leichtes Drückken der Verstellschraube 30 mit ihrem Gewindeabschnitt 32 in Richtung auf die Rückseite 48 zu und gleichzeitiges Drehen des Inbusschlüssels kann der Gewindeabschnitt 32 in Schraubeingriff mit dem ersten Abschnitt 44 des Durchgangs 42 gebracht werden. Durch nachfolgendes Drehen mit dem Inbusschlüssel kann also die Lage der Verstellschraube 30 in der Zustellrichtung Z verändert werden.

Zur Anbringung der erfindungsgemäßen Führungselementeneinheit 10 an dem Grundkörper 11 kann beispielsweise zunächst die Verstellschraube 30, d. h. jede Verstellschraube 30, in eine Stellung gebracht werden, wie sie in Fig. 3 gezeigt ist, in welcher die den Bolzen 26 bereichsweise aufnehmende Umfangsnut 40 bezüglich des Kanals 24, welcher in der Zustellrichtung Z eine größere Erstreckung aufweist als die Umfangsnut 40, zentral angeordnet ist. Dann kann, nachdem im Grundkörper 11 entsprechende Öffnungen, beispielsweise Gewindeöffnungen, für die Bolzen 26 vorgesehen worden sind, in jeden Kanal 24 ein Bolzen 26 eingeführt werden, so daß er, wie in Fig. 3, 5 und 6 dargestellt, in der Zustellrichtung Z zwischen den Flanschen 36, 38 gehalten ist. Die Bolzen 26 können dann vermittels eines geeigneten Werkzeugs, beispielsweise eines Sechskantschlüssels, der an den Bolzenköpfen 58 angreift, in die Gewindeöffnungen 56 eingeschraubt werden, bis eine leichte Klemmung des Gehäuses 12 am Grundkörper 11 erreicht ist. Dann kann der Grundkörper 11 mit der oder den daran gehaltenen Führungselementeneinheiten 10 an der oder den zugeordneten Führungsbahnen 20 positioniert werden, so daß die Laufrollen 14 in Anlage an den Führungsbahnen 20 sind. Dann kann durch Drehen der Verstellschrauben 30 vermittels des Inbuswerkzeugs jede Verstellschraube 30 in der Zustellrichtung Z in Richtung auf die Rückseite 48 des Gehäuses 12 zu bewegt werden. Da der oder jeder Bolzen 26 zwischen den Flanschen 36, 38 nahezu spielfrei gehalten ist und darüber hinaus jeder Bolzen 26 an dem Grundkörper 11 festgehalten ist, führt eine Verschiebung der Verstellschrauben 30 auf die Rückseite 48 zu zu einer Verschiebung des Gehäuses 12 in der Zustellrichtung Z auf die Führungsbahn 20 zu. Es läßt sich somit eine gewünschte Zustellkraft jeder Laufrolle 14 gegen die zugeordnete Führungsbahn 20 erhalten.

Da die Bolzen 26 zwischen den Flanschen 36, 38 nahezu spielfrei gehalten sind, ist es jedoch bei der erfindungsgemäßen Führungselementeneinheit 10 ebenso möglich, ein geringfügiges gewünschtes Bewegungsspiel zwischen der Laufrolle 14 und der Führungsbahn 20 vorzusehen.

Nachdem bei jeder Führungselementeneinheit 10 eine gewünschte Relativlage zur Führungsbahn 20 erreicht worden ist, werden die Bolzenelemente 26 weiter angezogen, um die Führungselementeneinheit 10 am Grundkörper 11 zu fixieren.

Um das Verstellen in der Zustellrichtung Z zu erleichtern, ist es möglich, den Schraubeingriff der Bolzen 26 mit dem Grundkörper 11 vor dem Verdrehen der Verstellschrauben 30 geringfügig zu lockern.

Um eine ungewünschte seitliche Verschiebung, d. h. Verschiebung in Ríchtung der Führungsachse A, zu vermeiden, kann einerseits eine derartige Ausgestaltung getroffen sein, daß jeder Bolzen 26 an oder im Bereich der Grundfläche jeder zugeordneten Nut 40 anliegt. Ferner kann eine derartige Anordnung getroffen sein, daß jeder Bolzen 26 an der von der Verstellschraube 30 abgewandten Innenoberflächenseite des zugeordneten Kanals 24 anliegt, so daß bei Vorsehen von zwei Bolzen 26, wie in Fig. 2 gezeigt, das Gehäuse 12 in Richtung der Führungsachse A zwischen den Bolzen 26 nahezu unverschiebbar gehalten ist.

Um den Bewegungshub in der Zustellrichtung Z zu vergrößern, ist es möglich, die Länge der Kanäle 24 in der Zustellrichtung Z zu vergrößern, d. h. diese Kanäle 24 als Langlöcher auszubilden.

Bei der erfindungsgemäßen Führungselementeneinheit 10 ist also jede Verstellschraube 30 mit ihrer Längsachse L in einer Versatzrichtung V in Richtung der Führungsachse A bezüglich einer zur Längsachse L im wesentlichen orthogonal stehenden Achse S jedes Bolzens 26 versetzt. Ferner ist jede Verstellschraube in ihrem am Bolzen 26 angreifenden Abschnitt als Rotationskörper ausgebildet, so daß die Verstellschraube 30 um ihre Längsachse L verdrehbar ist und dennoch jederzeit in Eingriff mit dem zugeordneten Bolzen 26 bleibt. Eine derartige Relativverdrehung wird dadurch ermöglicht, daß die Verstellschraube 30 in ihrem Stützabschnitt 34 den Bolzen 26 lediglich gabelartig umschließt und nicht vollständig umschlingt, wie dies beim Stand der Technik der Fall ist. Diese den Bolzen 26 nicht umschlingende Ausgestaltung ermöglicht die vorangehend beschriebene Verwendung einer Verstellschraube 30 als Verstellvorrichtung mit dem Vorteil, daß zum Zusammensetzen der Führungseinheit 10 lediglich jede Verstellschraube in die zugeordnete Durchgangsöffnung eingesetzt bzw. eingeschraubt werden muß.

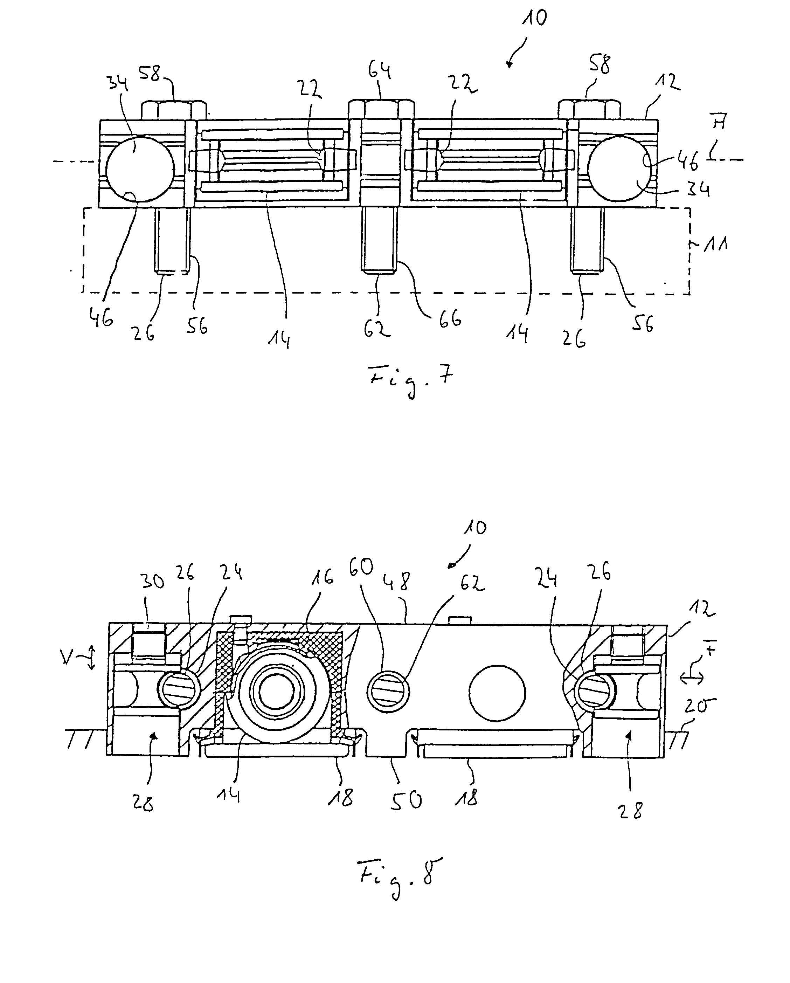

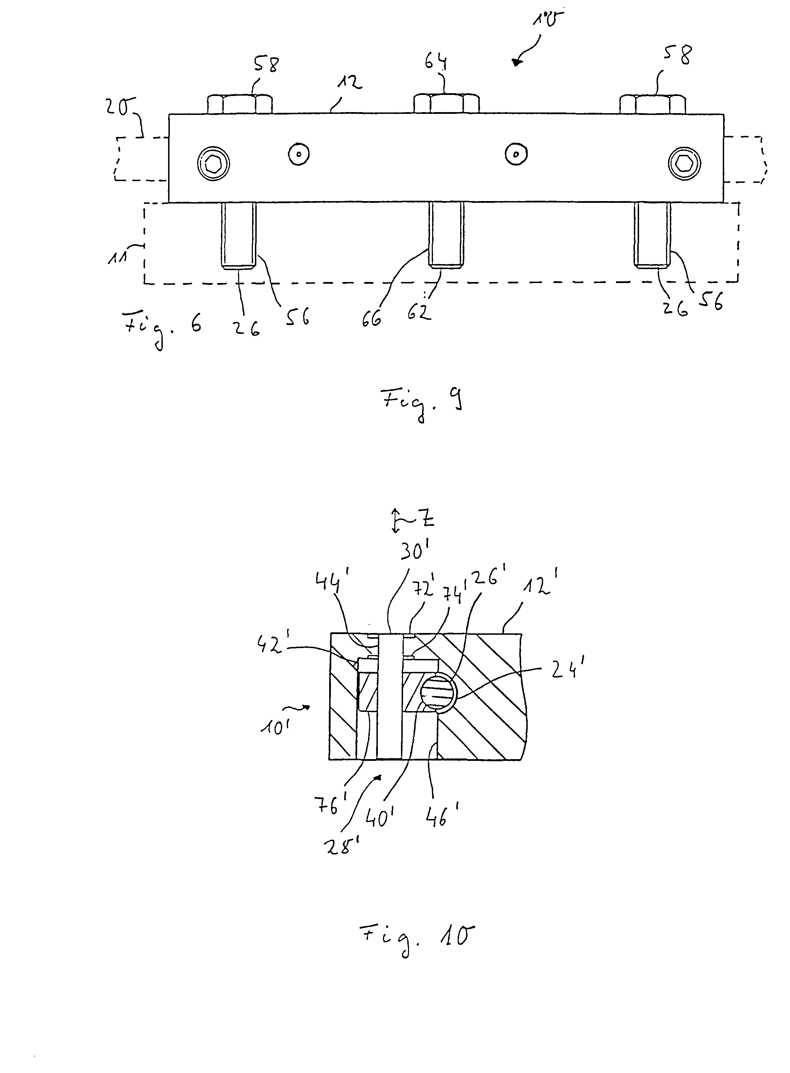

In den Fig. 7 - 9 ist eine alternative Ausgestaltungsform der erfindungsgemäßen Führungselementeneinheit 10 dargestellt. Da diese alternative Ausgestaltungsform hinsichtlich der Funktion der Verstellvorrichtungen identisch zu der mit Bezug auf die Fig. 2 - 5 beschriebenen Ausgestaltungsform ist, wird nachfolgend lediglich auf die Unterschiede eingegangen. Es werden zur Bezeichnung die gleichen Bezugszeichen verwendet, wie sie vorangehend mit Bezug auf die Fig. 1 -6 verwendet worden sind.

Wie in den Fig. 7 und 8 zu erkennen ist, weist die Führungselementeneinheit 10 dieser Ausführungsform zwei Laufrollen 14 auf, die in Richtung der Führungsachse A aufeinanderfolgend angeordnet sind und zur Anlage an der Führungsbahn 20 bringbar sind. Jede der Führungsrollen 14 ist wiederum in einer Ausnehmung 16 vermittels einer Auskleidung 18 angeordnet. An beiden in der Führungsrichtung entgegengesetzten Enden des Gehäuses 12 sind zwei Verstellvorrichtungen 28 vorgesehen, die mit Bolzen 26 zusammenwirken. Wie bereits erwähnt, ist die Art der Zusammenwirkung der Verstellvorrichtungen 28 mit dem Bolzen 26 identisch zu der vorangehend beschriebenen, so daß eine detaillierte Beschreibung hier nicht gegeben wird.

In der Richtung der Führungsachse A zwischen den beiden Laufrollen 14 ist ein weiterer Kanal 60 im Gehäuse 12 ausgebildet. Ein Befestigungsbolzen 62 durchsetzt den Kanal 60 und greift in eine Gewindeöffnung 66 im Grundkörper 11 ein. Der Befestigungsbolzen 62 weist wiederum einen Kopf 64 auf, an welchem ein Sechskantschlüssel oder dgl. angreifen kann, um den Befestigungsbolzen 62 in den Grundkörper 11 einzuschrauben. Dem Befestigungsbolzen 62 ist keine Verstellvorrichtung zugeordnet, so daß dieser lediglich die Funktion des Festlegens des Gehäuses 12 am Grundkörper 11 hat.

Zum Befestigen der Führungselementeneinheit 10 gemäß den Fig. 7 - 9 kann derart vorgegangen werden, daß zunächst der Befestigungsbolzen 62 in den Grundkörper 11 eingeschraubt wird, so daß er das Gehäuse 12 am Grundkörper 11 leicht klemmt. Nachfolgend oder bereits vorher können die Bolzen 26 in den Grundkörper 11 eingeschraubt werden, jedoch lediglich soweit, daß durch diese Bolzen eine Fixierung des Gehäuses 12 am Grundkörper im wesentlichen noch nicht vorgesehen ist. Dann kann durch das Verdrehen der Verstellschrauben 30 mit einem Inbusschlüssel das Gehäuse 12 an seinen beiden in der Richtung der Führungsachse A entgegengesetzten Enden in die gewünschte Lage bezüglich der Führungsbahn 20 bewegt werden. Um dies zu ermöglichen, weist auch der Befestigungsbolzen 62 in seinem Kanal 60 ein Bewegungsspiel in der Zustellrichtung Z auf. Da durch den Befestigungsbolzen 62 das Gehäuse 12 nur leicht geklemmt worden ist, ggf. der Befestigungsbolzen 62 vor dem Verstellen mit den Verstellschrauben 30 leicht gelockert worden ist, ist das Gehäuse 12 leicht in die gewünschte Stellung verschiebbar. Ist diese Stellung einmal erreicht, wird der Befestigungsbolzen 62 angezogen, und ebenso werden die Bolzen 26 angezogen, so daß das Gehäuse 12 am Grundkörper 11 festgelegt ist. Auch dabei ist eine derartige Einstellung möglich, daß ein gewünschtes geringfügiges Bewegungsspiel zwischen den Laufrollen 14 und der Führungsbahn 20 erhalten wird.

Die Verstellschrauben 30 können, so wie in den Figuren dargestellt, als ein Teil integral ausgebildet sein, beispielsweise können sie als nahezu herkömmliche Schrauben ausgebildet sein, in deren Schraubenkopf eine Umfangsnut eingefräst ist. Alternativ ist es jedoch auch möglich, daß die Verstellschrauben aus wenigstens zwei Komponenten zusammengesetzt sind, nämlich einer Komponente, die den Gewindeabschnitt bildet, und einer Komponente, die den Stützabschnitt bildet.

Diese beiden Komponenten können dann durch Verkleben, Verschweißen oder durch Gewindeeingriff miteinander fest verbunden werden. Darüberhinaus ist es möglich, Verstellschrauben vorzusehen, die lediglich einen Flansch aufweisen, welcher an der der Führungsbahn zugewandten Seite eines Bolzens angreift.

In Fig. 10 ist eine alternative Ausgestaltungsform der Verstellvorrichtung 28' dargestellt. Die Verstellvorrichtung 28' umfaßt eine Verstellschraube 30', die in dem Durchgangsabschnitt 44' frei drehbar, jedoch axial nicht verlagerbar gehalten ist. Dazu können beispielsweise an beiden axialen Enden des Durchgangsabschnitts 44' Klemmringe 72', 74' mit der Verstellschraube 30' verbunden werden. Der Klemmring 72' kann beispielsweise auch durch einen Schraubenkopf der Verstellschraube 30' ersetzt werden.

In dem Abschnitt 46' des Durchgangs 42' ist dann ein in der Längsrichtung der Verstellschraube 30' verlagerbares Stützteil 76' aufgenommen, welches mit der Verstellschraube 30' in Gewindeeingriff steht, d. h. bei Verdrehung der Verstellschraube 30', welche bezüglich des Gehäuses 12' nicht verlagerbar ist, bewegt sich das Stützteil 76' in der Längsrichtung der Verstellschraube 30'. Das Stützteil 76' weist zumindest in seinem dem Bolzen 26' zugewandten Bereich eine Vertiefung 40' auf, in welche der Bolzen 26' dann, wenn er den Kanal 24' durchsetzt, bereichsweise eingreift. D.h., durch eine Verschiebung des Stützteils 76' in der Längsrichtung der Verstellschraube 30', d. h. in der Zustellrichtung Z, wird der Bolzen 26' mitgenommen und somit wiederum bezüglich des Gehäuses 12' verlagert, was zu einer Zustellbewegung des Gehäuses 12', wie vorangehend beschrieben, führt. Bei dieser Ausgestaltungsform muß dafür Sorge getragen werden, daß das Stützteil 76' bei einer Drehung der Verstellschraube 30' um ihre Längsachse nicht mitgedreht wird. Dies kann beispielsweise durch eine derartige Anordnung vorgesehen werden, daß die Mittenachse des Durchgangsabschnitts 44' bezüglich der Mittenachse des Durchgangsabschnitts 46' exzentrisch liegt. Darüberhinaus ist es möglich, das Stützteil 76' mit beispielsweise rechtwinkeligem Umfangsprofil auszubilden, so daß bei Anlage des Bolzens 26' an der Oberfläche der Nut 40' eine Verdrehung des Stützteils 76' bezüglich des Gehäuses 12' verhindert wird. Auch können direkt am Gehäuse 12' Vorkehrungen zum Verhindern einer Verdrehung des Stützteils 76' getroffen werden.

Auch bei dieser Ausgestaltungsform greift das Stützteil 76' am Bolzen 26' umschlingungsfrei an und ist durch Verdrehen der ein Stellgetriebe bildenden Verstellschraube 30' zum Erzeugen einer Zustellkraft verlagerbar.

Obgleich in den dargestellten Ausführungsformen Laufrollen als Führungselemente vorgesehen sind, ist es ebenso möglich, in jeder der Führungselementeneinheiten 10, 10' Wälzkörperumlaufmechanismen vorzusehen, bei welchen in einer in sich geschlossenen Umlaufbahn eine Mehrzahl von Wälzkörpern verschiebbar aufgenommen ist, die an der jeweiligen Vorderseite der Führungselementeneinheiten 10, 10' zur Führungsbahn frei liegen und somit eine Verschiebung der Läuferbaugruppe 9 an der Führungsbahn ermöglichen.

In den Figuren sind die Bolzen 26 derart ausgebildet, daß sie mit ihren Köpfen 58 am Gehäuse 12 anliegen und in Gewindeöffnungen 56 im Grundkörper 11 eingreifen. Es ist jedoch auch möglich, am Grundkörper 11 stiftartige Bolzen vorzusehen, die von der Oberfläche des Grundkörpers 11 hervorstehen und auf welche dann das Gehäuse 12 derart aufgeschoben wird, daß diese stiftartigen Bolzen in die Kanäle eingreifen. Dabei ist es einerseits möglich, diese Bolzen derart auszugestalten, daß sie dann über das Gehäuse 12 hervorstehen, so daß beispielsweise zum Festlegen des Gehäuses 12 am Grundkörper 11 Muttern auf diese Bolzen aufgeschraubt werden können. Andererseits ist es möglich, daß diese stiftartigen Bolzen lediglich dazu dienen, mit den Verstellschrauben 30 zum Zustellen des Gehäuses 12 zusammenzuwirken. Die Fixierung des Gehäuses 12 am Grundkörper 11 kann dann durch andere Befestigungsbolzen, beispielsweise den Befestigungsbolzen 62 in der Darstellung der Fig. 7 - 9, vorgenommen werden.

Mit der vorangehend beschriebenen erfindungsgemäßen Führungselementeneinheit läßt sich in einfacher Weise eine Linearführungseinrichtung aufbauen, die beispielsweise zwei Führungsbahnen aufweist, die zusammen eine Führungsebene bzw. Zustellebene E bilden, wie in Fig. 1 gezeigt. Die beiden Führungsbahnen können zueinander derart positioniert sein, daß sie aufeinanderzu weisen (siehe Fig. 1). In diesem Fall sind dann am Grundkörper zumindest zwei mit ihren Vorderseiten aufeinanderzu weisende Führungselementeneinheiten anzubringen. Es ist jedoch auch möglich, daß die beiden Führungsbahnen voneinander weg weisen, wobei dann am Grundkörper wenigstens zwei mit ihren Rückseiten aufeinanderzu weisende Führungselementeneinheiten anzuordnen sind. Die Ausgestaltung der Führungselementeneinheiten ist vorzugsweise derart, daß die Drehachsen der Laufrollen ebenso wie die Längsachsen der Bolzen, des Befestigungsbolzens, und dementsprechend die Längsachsen der Kanäle, orthogonal zur Zustellebene stehen. Die Längsachsen der Durchgänge für die Verstellschrauben liegen vorzugsweise parallel zur Zustellebene oder sind in dieser Zustellebene enthalten.

## Patentansprüche

1. Läuferbaugruppe für eine Linearführungseinrichtung, bei der eine Läuferbaugruppe (9) auf einer Führungsschienenbaugruppe (13,20) längs einer Führungsachse (A) geführt ist und mindestens ein mit einer Laufbahn (20) der Führungsschienenbaugruppe (13,20) zusammenwirkendes Führungselement (14) der Läuferbaugruppe (9) in einer zur Führungsachse (A) parallelen Zustellebene (E) in einer Zustellrichtung (Z) im wesentlichen orthogonal zur Führungsachse (A) innerhalb der Läuferbaugruppe (9) verstellbar und damit zum Zwecke der Einstellung des Führungsspiels gegenüber der Laufbahn (20) verstellbar ist,
wobei die Läuferbaugruppe (9) einen Grundkörper (11) und mindestens eine Führungselementeneinheit (10) umfaßt, wobei diese Führungselementeneinheit (10) an mindestens einem von dem Grundkörper (11) getragenen, zu der Zustellebene (E) im wesentlichen orthogonalen, die Führungselementeneinheit (10) querenden Stützbolzen (26) mittels eines Stützteils (34) abgestützt ist und dieses Stützteil (34) durch ein Stellgetriebe (32) annähernd in Zustellrichtung (Z) verstellbar gelagert ist, wobei das Stützteil (34) an dem Stützbolzen (26) umschlingungsfrei angreift,
**dadurch gekennzeichnet, daß** das Stützteil (34) an der Führungselementeneinheit (10) vorgesehen und durch das Stellgetriebe (32) längs einer Stellkrafteinwirkungsachse beaufschlagt ist, die in der Zustellebene (E) in einer zur Zustellrichtung (Z) orthogonalen Versatzrichtung (V) gegenüber der Achse (S) des Stützbolzens (26) versetzt ist und mit mindestens einem Querausladebereich (36,38) an dem Stützbolzen (26) anliegt.

2. Läuferbaugruppe nach Anspruch 1,
**dadurch gekennzeichnet,**
**daß** das Stützteil (34) mit zwei in Zustellrichtung (Z) beabstandeten Querausladebereichen (36,38) einen Teil des Stützbolzens (26) eingabelt.

3. Läuferbaugruppe nach Anspruch 1 oder 2,
**dadurch gekennzeichnet,**
**daß** das Stützteil (34) als ein Rotationskörper mit einer Rotationskörperachse (L) ausgebildet ist, welche im wesentlichen parallel zur Zustellrichtung (Z) liegt.

4. Läuferbaugruppe nach Anspruch 3,
**dadurch gekennzeichnet,**
**daß** das Stützteil (34) als ein spulenförmiges Stützteil (34) mit zwei Flanschen (36,38) ausgebildet ist, welche einen Teil des Stützbolzens (26) eingabeln.

5. Läuferbaugruppe nach einem der Ansprüche 1 - 4,
**dadurch gekennzeichnet,**
**daß** das Stellgetriebe (32) ein Verschraubungsgetriebe (32) ist, welches eine Eingangswelle (32) mit einer Drehwerkzeug-Eingriffsformation (54) aufweist.

6. Läuferbaugruppe nach Anspruch 5,
**dadurch gekennzeichnet,**
**daß** das Verschraubungsgetriebe (32) Verschraubungsmittel (32) umfaßt, deren Verschraubungsachse (L) parallel zur Zustellrichtung (Z) verläuft.

7. Läuferbaugruppe nach Anspruch 5 oder 6,
**dadurch gekennzeichnet,**
**daß** das Verschraubungsgetriebe (32) einen zur gemeinsamen Drehbewegung und zur gemeinsamen Bewegung in Zustellrichtung (Z) mit dem Stützteil (34) verbundenen Schraubbolzen (32) umfaßt, welcher in eine Gewindebohrung (44) der Führungselementeneinheit (10) eingreift.

8. Läuferbaugruppe nach Anspruch 5 oder 6,
**dadurch gekennzeichnet,**
**daß** das Verschraubungsgetriebe (30') einen Schraubbolzen (30') umfaßt, welcher in der Führungselementeneinheit (10') drehbar und axial unverschiebbar gelagert ist und daß dieser Schraubbolzen (30') mit dem Stützteil (76') verschraubt ist, wobei das Stützteil (76') selbst gegen Mitdrehen mit dem Schraubbolzen (30') gesichert ist.

9. Läuferbaugruppe nach einem der Ansprüche 5 - 8,
**dadurch gekennzeichnet,**
**daß** die Drehwerkzeug-Eingriffsformation (54) von einer Außenfläche (48) der Führungselementeneinheit (10) her zugänglich ist, welche der Laufbahn (20) abgelegen ist.

10. Läuferbaugruppe nach einem der Ansprüche 1 - 9,
**dadurch gekennzeichnet,**
**daß** das Stützteil (34) in einem Durchgang der Führungselementeneinheit (46) aufgenommen ist, welcher sich parallel zur Zustellrichtung (Z) erstreckt.

11. Läuferbaugruppe nach Anspruch 10,
**dadurch gekennzeichnet,**
**daß** das Stützteil (34) in dem Durchgang (46) quer zur Zustellrichtung an der Führungselementeneinheit (10) abgestützt ist.

12. Läuferbaugruppe nach Anspruch 11,
**dadurch gekennzeichnet,**
**daß** das Stützteil (34) mit einem kreisförmigen Umriß in mindestens einem Abschnitt kreisförmigen Querschnitts des Durchgangs (46) abgestützt ist.

13. Läuferbaugruppe nach einem der Ansprüche 10 - 12,
**dadurch gekennzeichnet,**
**daß** der Durchgang (46) sich innerhalb der Führungselementeneinheit (10) mit einem Kanal (24) verschneidet, welcher den Stützbolzen (26) aufnimmt.

14. Läuferbaugruppe nach Anspruch 13,
**dadurch gekennzeichnet,**
**daß** der den Stützbolzen (26) aufnehmende Kanal zumindest in Zustellrichtung (Z) ein Übermaß gegenüber dem Querschnitt (d) des Stützbolzens (26) besitzt.

15. Läuferbaugruppe nach einem der Ansprüche 1 - 14,
**dadurch gekennzeichnet,**
**daß** die Führungselementeneinheit (10) an mindestens zwei in Richtung der Führungsachse (A) beabstandeten Stützbolzen (26) durch je ein Stützteil (34) abgestützt ist.

16. Läuferbaugruppe nach Anspruch 15,
**dadurch gekennzeichnet,**
**daß** die beiden Stützteile (34) in Richtung der Führungsachse (A) beidseits eines Führungselements (14) angeordnet sind.

17. Läuferbaugruppe nach einem der Ansprüche 1 - 16,
**dadurch gekennzeichnet,**
**daß** das mindestens eine Führungselement (14) von einem Gleitschuh, einem Wälzkörperumlauf oder - vorzugsweise-einer Führungsrolle (14) mit zur Zustellebene im wesentlichen orthogonaler Drehachse gebildet ist.

18. Läuferbaugruppe nach einem der Ansprüche 1 - 17,
**dadurch gekennzeichnet,**
**daß** die Führungselementeneinheit (10) gehäuseartig ausgebildet ist.

19. Läuferbaugruppe nach Anspruch 18,
**dadurch gekennzeichnet,**
**daß** in der gehäuseartig ausgebildeten Führungselementeneinheit (10) eine Schmiermittelversorgung für das mindestens eine Führungselement (14) untergebracht ist.

20. Läuferbaugruppe nach einem der Ansprüche 1 - 19,
**dadurch gekennzeichnet,**
**daß** die Führungselementeneinheit (10) in Richtung der Führungsachse durch mindestens zwei Stützteile (34) an jeweils zugehörigen Stützbolzen (26) im wesentlichen unbeweglich abgestützt ist.

21. Läuferbaugruppe nach einem der Ansprüche 1 - 20,
**dadurch gekennzeichnet,**
**daß** der mindestens eine Stützbolzen (26) als Schraubbolzen (26) ausgebildet ist, welcher dem Festspannen der Führungselementeneinheit (10) an dem Grundkörper (11) der Läuferbaugruppe (9) dient.

22. Läuferbaugruppe nach einem der Ansprüche 1 - 21,
**dadurch gekennzeichnet,**
**daß** sie mindestens zwei Führungselementeneinheiten (10) mit je mindestens einem Führungselement (14) zur Anlage an voneinander abgelegenen oder zueinander weisenden Laufbahnen (20) der Führungsschienenbaugruppe (13,20) umfaßt.

## Claims

1. Sliding unit for a linear guide device in which a sliding unit (9) is guided on a guide rail unit (13, 20) along a guide axis (A) and at least one guide element (14) of the sliding unit (9) cooperating with a track (20) of the guide rail unit (13, 20) is adjustable in a feed plane (E) parallel to the guide axis (A) in a feed direction (Z) substantially orthogonal to the guide axis (A) inside the sliding unit (9) and is therefore adjustable relative to the track (20) for the purpose of setting the guide play, wherein the sliding unit (9) comprises a base member (11) and at least one guide element unit (10), wherein this guide element unit (10) is supported by means of a support part (34) on at least one support pin (26) carried by the base member (11), substantially orthogonal to the feed plane E and traversing the guide element unit (10) and this support part (34) is adjustably mounted approximately in the feed direction (Z) by a regulating mechanism (32), the support part (34) engaging without gripping on the support pin (26), **characterised in that** the support part (34) is provided on the guide element unit (10) and is loaded by the regulating mechanism (32) along an axis of adjusting force influence, the axis being offset relative to the axis (S) of the support pin (26) in the feed plane (E) in an offset direction (V) orthogonal to the feed direction (Z) and rests on the support pin (26) with at least one transverse projection region (36, 38).

2. Sliding unit according to claim 1, **characterised in that** the support part (34) straddles a part of the support pin (26) with two transverse projection regions (36, 38) spaced in the feed direction (Z).

3. Sliding unit according to claim 1 or 2, **characterised in that** the support part (34) is designed as a rotary member with a rotary member axis (L) located substantially parallel to the feed direction (Z).

4. Sliding unit according to claim 3, **characterised in that** the support part (34) is designed as a reel-shaped support part (34) with two flanges (36, 38) straddling a part of the support pin (26).

5. Sliding unit according to any one of claims 1 to 4, **characterised in that** the regulating mechanism (32) is a thread mechanism (32) having an input shaft (32) with a rotary tool engagement formation (54).

6. Sliding unit according to claim 5, **characterised in that** the thread mechanism (32) comprises thread means (32) the thread axis (L) of which runs parallel to the feed direction (Z).

7. Sliding unit according to claim 5 or 6, **characterised in that** the thread mechanism (32) comprises a stud (32) connected to the support part (34) for common rotary movement and common movement in the feed direction (Z), the stud (32) engaging in a threaded hole (44) of the guide element unit (10).

8. Sliding unit according to claim 5 or 6, **characterised in that** the thread mechanism (30') comprises a stud (30') mounted so as to be rotatably and axially non-displaceable in the guide element unit (10') and **in that** this stud (30') is screwed to the support part (76'), the support part (76') itself being secured against co-rotation with the stud (30').

9. Sliding unit according to any one of claims 5 to 8, **characterised in that** the rotary tool engagement formation (54) is accessible from an external surface (48) of the guide element unit (10) which is remote from the track (20).

10. Sliding unit according to any one of claims 1 to 9, **characterised in that** the support part (34) is received in an opening of the guide element unit (46) extending parallel to the feed direction (Z).

11. Sliding unit according to claim 10, **characterised in that** the support part (34) is supported on the guide element unit (10) transversely to the feed direction in the opening (36).

12. Sliding unit according to claim 11, **characterised in that** the support part (34) with a circular outline is supported in at least one portion of circular cross-section of the opening (46).

13. Sliding unit according to any one of claims 10 to 12, **characterised in that** the opening (46) merges inside the guide element unit (10) with a duct (24) receiving the support pin (26).

14. Sliding unit according to claim 13 **characterised in that** the duct receiving the support pin (26) has an oversize relative to the cross-section (d) of the support pin (26), at least in the feed direction (Z).

15. Sliding unit according to any one of claims 1 to 14, **characterised in that** the guide element unit (10) is supported on at least two support pins (26) spaced in the direction of the guide axis (A) by a support part (34) in each case.

16. Sliding unit according to claim 15, **characterised in that** the two support parts (34) are arranged on either side of a guide element (14) in the direction of the guide axis (A).

17. Sliding unit according to any one of claims 1 to 16, **characterised in that** at least one guide element (14) is formed by a sliding block, a rolling body periphery or, preferably, a guide roller (14) with an axis of rotation which is substantially orthogonal to the feed plane.

18. Sliding unit according to any one of claims 1 to 17, **characterised in that** the guide element unit (10) is housing-like in design.

19. Sliding unit according to claim 18, **characterised in that** a lubricant supply for the at least one guide element (14) is housed in the guide element unit (10) which is housing-like in design.

20. Sliding unit according to any one of claims 1 to 19, **characterised in that** the guide element unit (10) is substantially immovably supported in the direction of the guide axis by at least two support parts (34) on respectively associated support pins (26).

21. Sliding unit according to any one of claims 1 to 20, **characterised in that** the at least one support pin (26) is designed as a stud (26) serving to firmly fix the guide element unit (10) on the base member (11) of the sliding unit (9).

22. Sliding unit according to any one of claims 1 to 21, **characterised in that** it comprises at least two guide element units (10) each with at least one guide element (14) for resting on tracks (20) of the guide rail unit (13, 20) pointing toward one another or remote from one another.

## Revendications

1. Ensemble curseur pour un dispositif de guidage linéaire, dans lequel un ensemble curseur (9) est guidé sur un ensemble à rail de guidage (13,20) le long d'un axe de guidage (A) et au moins un élément de guidage (14) de l'ensemble curseur (9) coopérant avec une piste de déplacement (20) de l'ensemble à rail de guidage (13, 20) est mobile à l'intérieur de l'ensemble curseur (9) dans un plan d'avance (E) parallèle à l'axe de guidage (A), dans une direction d'avance (Z) essentiellement orthogonale à l'axe de guidage (A), et est ainsi mobile à des fins de réglage du jeu de guidage par rapport à la piste de déplacement (20),
dans lequel l'ensemble curseur (9) comprend un corps de base (11) et au moins une unité d'élément de guidage (10), cette unité d'élément de guidage (10) étant soutenue au moyen d'une partie de soutien (34) sur au moins un goujon de soutien (26) porté par le corps de base (11), sensiblement orthogonal au plan d'avance (E) et intersectant l'unité d'élément de guidage (10), et cette partie de soutien (34) étant montée mobile approximativement dans la direction d'avance (Z) par un mécanisme de réglage (32), la partie de soutien (34) se mettant en prise sans enroulement sur le goujon de soutien (26),
**caractérisé en ce que** la partie de soutien (34) est prévue sur l'unité d'élément de guidage (10) et peut être sollicitée par le mécanisme de réglage (32) à le long d'un axe d'action de force de réglage qui est décalé dans le plan d'avance (E), par rapport à l'axe (S) du goujon de soutien (26), dans une direction de décalage (V) orthogonale à la direction d'avance (Z) et s'appuie contre le goujon d'avance (26) par au moins une zone de console transversale (36, 38).

2. Ensemble curseur selon la revendication 1, **caractérisé en ce que** la partie de soutien (34) enfourche une partie du goujon de soutien (26) par deux zones de console radiale (36, 38) espacées dans la direction d'avance (Z).

3. Ensemble curseur selon la revendication 1 ou 2, **caractérisé en ce que** la partie de soutien (34) est conformé en corps de révolution avec un axe de corps de révolution (L) qui est sensiblement parallèle à la direction d'avance (Z).

4. Ensemble curseur selon la revendication 3, **caractérisé en ce que** la partie de soutien (34) est conformée en partie de soutien en forme de bobine (34) avec deux flasques (36, 38) qui enfourchent une partie du goujon de soutien (26).

5. Ensemble curseur selon l'une des revendications 1 à 4, **caractérisé en ce que** le mécanisme de réglage (32) est un mécanisme à vissage (32) qui présente un arbre d'entrée (32) avec une conformation de prise (54) pour un outil tournant.

6. Ensemble curseur selon la revendication 5, **caractérisé en ce que** le mécanisme à vissage (32) comprend des moyens de vissage (32) dont l'axe de vissage (L) s'étend parallèlement à la direction d'avance (Z).

7. Ensemble curseur selon la revendication 5 ou 6, **caractérisé en ce que** le mécanisme à vissage (32) comprend une tige filetée (32) reliée à la partie de soutien (34) pour un mouvement de rotation commun et pour un déplacement commun dans la direction d'avance (Z), tige qui s'engage dans un trou taraudé (44) de l'unité d'élément de guidage (10).

8. Ensemble curseur selon la revendication 5 ou 6, **caractérisé en ce que** le mécanisme à vissage (30') comprend une tige filetée (30') qui est montée rotative et immobilisée axialement dans l'unité d'élément de guidage (10') et **en ce que** cette tige filetée (30') est vissée à la partie de soutien (76'), la partie de soutien (76') étant elle-même immobilisée en rotation par rapport à la tige filetée (30').

9. Ensemble curseur selon l'une des revendications 5 à 8, **caractérisé en ce que** la conformation de prise d'outil tournant (54) est accessible depuis une surface extérieure (48) de l'unité d'élément de guidage (10) qui est opposée à la piste de déplacement (20).

10. Ensemble curseur selon l'une des revendications 1 à 9, **caractérisé en ce que** la partie de soutien (34) est logée dans un passage de l'unité d'élément de guidage (46) qui s'étend parallèlement à la direction d'avance (Z).

11. Ensemble curseur selon la revendication 10, **caractérisé en ce que** la partie de soutien (34) est appuyée sur l'unité d'élément de guidage (10) dans le passage (46) transversalement à la direction d'avance.

12. Ensemble curseur selon la revendication 11, **caractérisé en ce que** la partie de soutien (34) est appuyée par un contour circulaire dans au moins une partie de section transversale circulaire du passage (46).

13. Ensemble curseur selon l'une des revendications -10 à 12, **caractérisé en ce que** le passage (46) intersecte dans l'unité d'élément de guidage (10) un canal (24) qui reçoit le goujon de soutien (26).

14. Ensemble curseur selon la revendication 13, **caractérisé en ce que** le canal recevant le goujon de soutien (26) possède au moins dans la direction d'avance (Z) un débord par rapport à la section transversale (d) du goujon de soutien (26).

15. Ensemble curseur selon l'une des revendications 1 à 14, **caractérisé en ce que** l'unité d'élément de réglage (10) est appuyée sur au moins deux goujons de soutien (26) espacés dans la direction de l'axe de guidage (A) par, à chaque fois, une partie de soutien (34).

16. Ensemble curseur selon la revendication 15, **caractérisé en ce que** les deux parties d'appui (34) sont placées des deux côtés d'un élément de guidage (14), dans la direction de l'axe de guidage (A).

17. Ensemble curseur selon l'une des revendications 1 à 16, **caractérisé en ce que** l'élément de guidage (14) au nombre d'au moins un est formé par un sabot glissant, une circonférence de corps cylindrique ou - de préférence - un rouleau de guidage (14) d'axe de rotation sensiblement orthogonal au plan d'avance.

18. Ensemble curseur selon l'une des revendications 1 à 17, **caractérisé en ce que** l'unité d'élément de réglage (10) est conformée à la manière d'un boîtier.

19. Ensemble curseur selon la revendication 18, **caractérisé en ce que** dans l'unité d'élément de réglage (10) conformée en boîtier est logée une alimentation en lubrifiant pour l'élément de guidage (14) au nombre d'au moins un.

20. Ensemble curseur selon l'une des revendications 1 à 19, **caractérisé en ce que** l'unité d'élément de réglage (10) est soutenue dans la direction de l'axe de guidage, de manière sensiblement stationnaire, par au moins deux parties de soutien (34), sur des goujons de soutien (26) respectifs associés.

21. Ensemble curseur selon l'une des revendications 1 à 20, **caractérisé en ce que** le goujon de soutien (26) au nombre d'au moins un est conformé en tige filetée (26) qui sert au serrage de l'unité d'élément de guidage (10) sur le corps de base (11) de l'ensemble curseur (9).

22. Ensemble curseur selon l'une des revendications 1 à 21, **caractérisé en ce qu'**il comprend au moins deux unités d'élément de guidage (10), chacune avec au moins un élément de guidage (14) pour s'appuyer sur des pistes de déplacement (20) mutuellement opposées ou en vis-à-vis de l'ensemble à rail de guidage (13, 20).
